Europäisches Patentamt

European Patent Office

Office européen des brevets

(19)

(11) EP 1 140 698 B1

(12) EUROPÄISCHE PATENTSCHRIFT

(45) Veröffentlichungstag und Bekanntmachung des Hinweises auf die Patenterteilung:
20.08.2003 Patentblatt 2003/34

(21) Anmeldenummer: 99957982.4

(22) Anmeldetag: 03.11.1999

(51) Int Cl.$^7$: C01B 31/34, C04B 35/56

(86) Internationale Anmeldenummer:
PCT/EP99/08373

(87) Internationale Veröffentlichungsnummer:
WO 00/029325 (25.05.2000 Gazette 2000/21)

(54) VERFAHREN ZUR HERSTELLUNG VON WOLFRAMKARBIDEN DURCH GASPHASENKARBURIERUNG

METHOD FOR PRODUCING WOLFRAM CARBIDES BY GAS-PHASE CARBURETION

PROCEDE DE PREPARATION DE CARBURES DE TUNGSTENE PAR CARBURATION EN PHASE GAZEUSE

(84) Benannte Vertragsstaaten:
AT BE CH CY DE DK ES FI FR GB GR IE IT LI LU MC NL PT SE

(30) Priorität: 13.11.1998 DE 19852459

(43) Veröffentlichungstag der Anmeldung:
10.10.2001 Patentblatt 2001/41

(73) Patentinhaber: H.C. Starck GmbH
38642 Goslar (DE)

(72) Erfinder:
• GILLE, Gerhard
  D-38640 Goslar (DE)
• GRIES, Benno
  D-38302 Wolfenbüttel (DE)
• BREDTHAUER, Jörg
  D-53123 Bonn (DE)

(74) Vertreter: Peters, Frank M., Dr.
Bayer AG
Bayer Chemicals
Law and Patents
Patents and Licensing
51368 Leverkusen (DE)

(56) Entgegenhaltungen:
EP-A- 0 286 294          EP-B- 0 598 040
DE-A- 1 916 340          FR-A- 2 294 133
US-A- 4 172 808

• NAVA ALONSO F C ET AL: "TUNGSTEN TRIOXIDE REDUCTION-CARBURIZATION WITH CARBON MONOXIDE-CARBON DIOXIDE MIXTURES: KINETICS AND THERMODYNAMICS" INT J MINER PROCESS JUN 1987, Bd. 20, Nr. 1-2, Juni 1987 (1987-06), Seiten 137-151, XP000874467

**Beschreibung**

Die Erfindung betrifft ein Verfahren zur direkten Herstellung von Karbiden aus Wolfram-haltigen Verbindungen, mittels einer Kohlenmonoxid und Kohlendioxid enthaltenden Atmosphäre.

Die Umsetzung von Wolfram-haltigen Verbindungen, insbesondere Wolframoxiden, mit Kohlenmonoxid, gegebenenfalls auch einer Mischung aus Kohlenmonoxid und Kohlendioxid bei erhöhter Temperatur ist an sich bekannt.

So offenbart die US-Patentschrift 4,172,808 ein Verfahren, bei dem $WO_3$ bei Temperaturen von 590 bis 680°C in einem Kohlenmonoxidstrom, der 5 bis 10 % Kohlendioxid enthält, zu Wolframkarbidpulvern umgesetzt wird. Das Produkt enthält noch 2 % Sauerstoff, ist also nicht vollständig durchreagiert. Ferner weist das Produkt auf seiner Oberfläche eine nichtspezifizierte Menge an freiem Kohlenstoff auf. Gemäß US-A 4,172,808 ist der Sauerstoffgehalt für Katalysatoranwendungen akzeptabel und der oberflächliche freie Kohlenstoff für eine hohe Katalysatoraktivität erforderlich. Derartige Wolfram-Karbidpulver sind jedoch für die Verwendung als Hartstoff in Hartmetallen ungeeignet, da es hierbei auf eine genaue Beherrschung des Kohlenstoffgehaltes im Rahmen weniger Hundertstel Prozente ankommt.

Gemäß US-Patent 5,230,729 wird die Gasphasenkarburierung mittels eines $CO_2/CO$-Gemisches für einen Teilschritt der Herstellung von feinteiligem WC-Co-Pulver für die Hartmetallherstellung beschrieben. Danach wird die Wolfram-Vorläuferverbindung $Co(en)_3WO_4$ zunächst in einem wasserstoffhaltigen Inertgasstrom zu hochporösem Co-W-Metall reduziert, anschließend im Kohlenmonoxid-Gasstrom zum WC-Co karburiert und danach in einem $CO_2/CO$-Gasstrom freier Kohlenstoff entfernt. Dabei werden Karburierungstemperaturen von 700 bis 850°C eingesetzt.

US-Patent 5,230,729 nimmt ferner auf einem Stand der Technik bezug, nach dem die Karburierung zu WC-Co-Pulver bei Kohlenstoffaktivitäten von 0,35 bis 0,95 offenbar ohne die Zwischenstufe der Wasserstoffreduktion zum Co-W durchgeführt wurde. Dabei wird als nachteilig angesehen, daß es aufgrund der durch die Anwesenheit von Kobalt bereits bei niedrigen Temperaturen katalytisch bewirkten starken Kohlenmonoxidzersetzung zu einer starken Kohlenstoffaufnahme durch die WC-Co-Ausgangsstoffe kommt, die zu einer metastabilen Zwischenphase führt. Dadurch werden sehr lange Reaktionsseiten erforderlich.

Aufgrund der fehlenden katalytischen Wirkung des Kobalt sind die Lehren bezüglich Gasphasenkarburierung zur Herstellung von WC-Co nicht auf die Herstellung von WC-Pulvern übertragbar.

Umfangreiche Untersuchungen wurden von LEMAITRE, VIDICK, DELMON in Acta Chim. Acad. Sci, Hung. 111 (1982) pp. 449-463 und Journal of Catalysis 99 (1986) pp. 415-427 zur Herstellung von Wolfram-Karbidpulvern durch Gasphasen-Karburierung mitgeteilt, wobei sowohl Kohlenmonoxid als auch Mischungen aus Kohlendioxid und Kohlenmonoxid mit Kohlendioxidgehalten von 9 bis 50 % im Temperaturbereich von 722 bis 850°C eingesetzt wurden. Dabei wurden sowohl Pulver mit hohen Anteilen an freiem Kohlenstoff als auch stark unterkarburierter Wolframkarbidpulver bzw. $W_2C$-Pulver erhalten; teilweise wurde auch eine Rückoxidation zum Wolframoxid beobachtet. Als optimal wird eine Karburierungstemperatur von 750°C angesehen.

Das gemeinsame Resumée des Standes der Technik scheint zu sein, daß eine Gasphasenkarburierung mit reinem Kohlenmonoxid bei Temperaturen oberhalb von 850°C aufgrund des Boudouard-Gleichgewichtes zu einer Belegung der Vorläuferverbindung mit graphitähnlichem Kohlenstoff führt, so daß die Reaktion gebremst wird bzw. zum Stehen kommt und damit zumindest technisch nicht realisierbare lange Reaktionszeiten erforderlich sind. Andererseits scheinen die mitgeteilten Versuche des Standes der Technik zu belegen, daß bei Einsatz von $CO_2/CO$-Karburierungsgasgemischen mit $CO_2$-Gehalten, die bei Karburierungstemperatur etwa der Lage des Boudouard-Gleichgewicht entsprechen oder darüber liegen, eine vollständige Karburierung nicht möglich ist.

Es wurde nun gefunden, daß eine im wesentlichen vollständige Karburierung von Wolfram-Vorläuferverbindungen erzielt wird, wenn im Temperaturbereich von 800 bis 1 000°C, vorzugsweise 850 bis 950°C, ein Karburierungsgas eingesetzt wird, dessen Kohlendioxid-Gehalt, bezogen auf Kohlendioxid und Kohlenmonoxid, oberhalb des Boudouard-Gleichgewichtes bei Karburierungstemperatur liegt, d.h. das eine Kohlenstoffaktivität kleiner 1 aufweist. Liegt der Kohlendioxidgehalt jedoch zu hoch, findet eine unvollständige Karburierung bzw. sogar unvollständige Reduktion statt. Erfindungsgemäß wird die Kohlenstoffaktivität des $CO/CO_2$-Gemisches zwischen 0,4 und <1 gehalten, besonders bevorzugt zwischen 0,5 und 0,85 liegen.

Der Zusammenhang zwischen den relativen Anteilen von CO und $CO_2$ im Karburierungsgas einerseits und der Kohlenstoffaktivität $a_c$ andererseits errechnet sich aus der folgenden Formel:

$$\ln a_c = \ln (p_{co}^2/p_{co2}) + 20715/T - 21,24,$$

wobei $p_{co}$ bzw. $p_{co2}$ den jeweiligen Partialdruck von CO bzw. $CO_2$ und T die absolute Temperatur in K bezeichnet. Das Boudouard-Gleichgewicht entspricht einer Kohlenstoffaktivität $a_c = 1$.

Dadurch, daß die Kohlenstoffaktivität während des Prozesses kleiner eins gehalten wird, wird die Abscheidung von elementarem Kohlenstoff thermodynamisch unmöglich gemacht, so daß der Kohlenstoffgehalt des erhaltenen Wolframkarbides reproduzierbar und genau gesteuert werden kann. Andererseits ist bei Temperaturen oberhalb von 800°C, vorzugsweise 850°C, die $CO_2$-Gleichgewichtskonzentration bereits so gering, daß auch bei Überschreiten der Gleichgewichtskonzentration noch eine vollständig und hinreichend schnelle Reduktion und Karburierung der Wolfram-Vorläuferverbindung erfolgt. Besonders bevorzugt soll das $CO_2$/CO-Partialdruck-Verhältnis 1:8 nicht überschreiten.

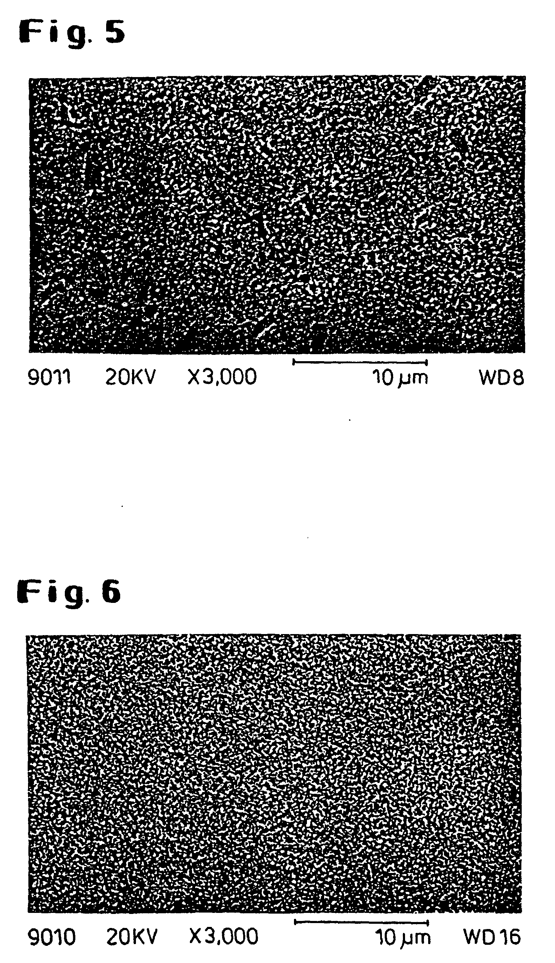

Das erfindungsgemäße Verfahren ist vor dem Hintergrund des in der Veröffentlichung Journal of Catalysis <u>99</u>, S. 430, Fig. 5, mitgeteilten Phasendiagramms des Systems $WO_3$-$WO_2$-W-$W_2$C-WC-C überraschend, da nach dem Phasendiagramm oberhalb von 800°C durch Karburierung mit einem $CO_2$/CO-Gemisch mit einem $CO_2$-Gehalt oberhalb des Boudouard-Gleichgewichtes die Phase $W_2$C entstehen sollte und eine Karburierung bis zum WC jedenfalls innerhalb technisch realisierbarer Reaktionszeiten nicht stattfinden sollte.

Gegenstand der vorliegenden Erfindung ist daher ein Verfahren zur Herstellung von Refräktärmetallkarbiden durch Gasphasenkarburierung von Wolfram-Pulver und/oder geeigneten Wolfram-Vorläuferverbindungspulvem bei Temperaturen oberhalb von 850°C, das dadurch gekennzeichnet ist, daß als karburierende Gasphase ein $CO_2$/CO-Gemisch mit einem $CO_2$-Gehalt, der oberhalb des der Karburierungstemperatur entsprechenden Boudouard-Gleichgewichts-Gehaltes liegt, eingesetzt wird.

Vorzugsweise wird eine Gasphase eingesetzt, die außer unvermeidbaren Spuren an Stickstoff, Argon und Helium ausschließlich aus Kohlendioxid und Kohlenmonoxid besteht.

Zur Aufrechterhaltung des vorgewählten $CO_2$-CO-Verhältnisses wird gebildetes Kohlendioxid während der Reduktion und Karburierung abgezogen. Dies kann dadurch erfolgen, daß in Abhängigkeit vom $CO_2$-Gehalt der Gasphase Kohlenmonoxid in den Karburierungsreaktor eingeleitet wird oder der Reaktor mit der Gasphase, die das vorgewählte $CO_2$-CO-Verhältnis aufweist, gespült wird.

Bevorzugt beträgt die Karburierungstemperatur 900 bis 950°C.

Der $CO_2$-Gehalt des $CO_2$-CO-Gemischs liegt vorzugsweise unterhalb von 8 mol-% im Temperaturbereich von 850 bis 900°C und im Temperaturbereich oberhalb 900°C unterhalb 4 mol-%.

Die Karburierung bei Karburierungstemperatur wird vorzugsweise über einen Zeitraum von 4 bis 10 Stunden, insbesondere bevorzugt über einen Zeitraum von 5 bis 8 Stunden durchgefüht. Bevorzut werden im Rahmen des erfindungsgemäßen Verfahrens als Karbid-Vorläufer Wolfram-Oxidpulver eingesetzt. Das erfindungsgemäße Verfahren ist dann besonders bevorzugt, wenn eine vorgeschaltete Reduktion von Oxiden bzw. anderen Vorläuferverbindungen zum Metall vermieden wird.

Sofern andere Wolfram-Vorläuferverbindungen eingesetzt werden, werden diese vorzugsweise in einem vorgeschalteten Calcinierschritt zum Oxid zersetzt. Dies hat den Vorteil, daß das Karburierungsgas nicht durch Zersetzungsprodukte verunreinigt wird und daher rezirkuliert werden kann.

Nach einer weiter bevorzugten Ausführungsform der Erfindung werden die nach dem erfindungsgemäßen Verfahren erhaltenen Wolframkarbide im Anschluß an die Karburierung einer Wärmebehandlung bei 1 150 bis 1 800°C unterzogen. Bevorzugt beträgt die Temperatur bei der anschließenden Wärmebehandlung 1 350 bis 1 550°C, insbesondere bevorzugt bis 1 450°C. Die thermische Nachbehandlung kann beispielsweise im Durchschubofen für eine Dauer von 1 bis 60 Minuten, vorzugsweise 25 bis 50 Minuten durchgefüht werden. Gegebenenfalls kann die Wärmebehandlung unter Zugabe von kohlenstoffhaltigen Verbindungen geführt werden.

Aus den erfindungsgemäße erhältlichen feinteiligen Karbidpulvern lassen sich Sinterteile mit homogenen Gefügen und hohen Härten herstellen, ohne daß eine intensive Aufarbeitung durch Mühlen notwendig ist. Dabei werden Härten des gesinterten Hart-Metalls erreicht, die bei gleichen Bindergehalten über denen kommerzieller Sorten liegen. Dies liegt auch daran, daß die erfindungsgemäß erhaltenen Karbide wenig agglomeriert sind und in nahezu einheitlicher Korngröße vorliegen, so daß die Neigung zu sekundärem Kornwachstum während der Sinterung unbedeutend wird.

Insbesondere sinterstabile Karbidpulver werden durch die thermische Nachbehandlung erhalten, weil Kristallgitterfehler durch die thermische Nachbehandlung weitgehend abgebaut werden.

Die Erfindung wird nachfolgend anhand der beiliegenden Figuren näher erläutert:

Insbesondere bevorzugte Wolfram-Karbide sind gekennzeichnet durch die Beziehung von Kohärenzlänge x und Gitterverzerrung von y gemäß Formel

$$y > (1-x^2/3600 \text{ nm}^2)^{1/2} \cdot 0{,}075 \text{ \%} \qquad\qquad (III).$$

Derartige Wolfram-Karbide werden durch Temperaturbehandlung im Anschluß an die Karburierung erhalten.

Fig. 1 zeigt die Beziehung zwischen Gitterverzerrung und Kohärenzlänge der erfindungsgemäß bevorzugten Wolfram-Karbidpulver, wobei die Ziffern an den Meßwerten auf die nachfolgend angegebenen Beispiele hinweisen und die Buchstaben an den Meßpunkten außerhalb des erfindungsgemäßen Bereiches auf im Markt befindliche Produkte.

Fig. 2    zeigt eine REM-Aufhahme eines gemäß dem nachfolgenden Beispiel 2 hergestellten Wolfram-Karbidpulvers.

Fig. 3    zeigt eine REM-Aufnahme des gemäß Beispiel 3 hergestellten Wolfram-Karbidpulvers.

Fig. 4    zeigt eine REM-Aufnahme des gemäß Beispiel 4 hergestellten Wolfram-Karbidpulvers.

Fig. 5    und 6 zeigen REM-Aufhahmen von Hartmetallen, hergestellt unter Einsatz von Wolfram-Karbidpulvern gemäß Beispiel 1 bzw. 3.

Die Erfindung wird nachfolgend anhand von Beispielen näher erläutert.

### Beispiele

### Beispiel 1

In einem Sinterofen wurden 2 kg $WO_3$-blau, 0,60 μm (ASTM B330), auf 500°C unter N2-Atmosphäre aufgeheizt. Anschließend wurde evakuiert und auf $CO/CO_2$-Prozeßgas gewechselt, wobei das $CO/CO_2$-Verhältnis 97/3 betrug, und auf 920°C aufgeheizt. Die Kohlenstorfaktivität betrug bei Reaktionstemperatur 0,65. Das während der Reaktion entstandene $CO_2$ wurde fortlaufend entfernt und durch CO esetzt, wobei das $CO/O_2$-Verhältnis von 97/3 konstant gehalten wurde. Die Reaktion war nach 8 Stunden beendet, so daß der Ofen dann unter $N_2$ auf Raumtemperatur abkühlen konnte. Man erhielt etwa 1,5 kg Puler, was sich anhand der Röntgenbeugung als phasenreines Wolframkarbid identifizieren ließ. Das Pulver zeichnet sich durch folgende Analysenwerte aus:

$$C_{ges} = 5,90 \%  \qquad C_{frei} < 0,02 \%$$

$$O = 0,57 \%  \qquad N = 0,06 \%$$

$$FSSS = 0,47 \ \mu m \ (ASTM \ B330)$$

Die oben und im folgenen angegebenen %-Werte beziehen sich auf Gewichtsprozente.

### Beispiel 2

In einen Sinterofen wurden, wie in Beispiel 1 beschrieben, 2 kg $WO_3$-blau zu Wolframkarbid umgesetzt, wobei hier während der Abkühlphase noch bis 700°C unter Prozeßgas gearbeitet wurde, ehe man dann unter $N_2$ auf Raumtmperatur abkühlen ließ:

$$C_{ges} = 5,89 \%  \qquad C_{frei} < 0,02 \%$$

$$O = 0,41 \%  \qquad N = 0,07 \%$$

$$FSSS = 0,32 \ \mu m \ (ASTM \ B330)$$

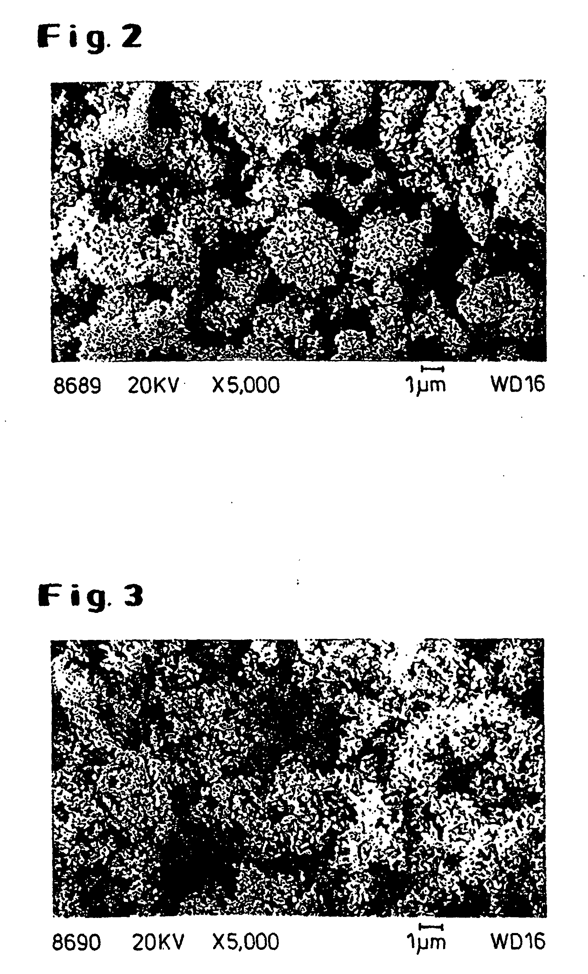

Das so gewonnene Pulver wurde im Durchschubofen 40 Minuten bei 1 400°C thermisch nachbehandelt, wobei die aufkohlende Atmosphäre im Ofen ausreichte, um nahe an den theoretischen Kohlenstoffgehalt des Wolframkarbids zu gelangen. Das daraus erhaltene Pulver (Fig. 2) zeichnet sich durch folgende Analysenwerte aus:

$$C_{ges} = 6,08 \%  \qquad C_{frei} < 0,03 \%$$

$$O = 0,23 \%  \qquad N = 0,05 \%$$

$$FSSS = 0,40 \ \mu m \ (ASTM \ B330)$$

**Beispiel 3**

Es wurde analog Beispiel 2 gearbeitet, mit dem Unterschied, daß hier feinteilige Wolframsäure (Fsss = 0,40 µm, gemäß ASTM B330) für die Karburierung verwendet wurde. Zu Anfang wurde das Material bei 500°C 3 Stunden in situ calziniert, um dann wie in Beispiel 2 fortzufahren. Anhand der REM-Aufnahme (Fig. 3) erkennt man, daß das Pulver wenig agglomeriert vorliegt.

$$C_{ges} = 6,08 \ \% \qquad C_{frei} < 0,03 \ \%$$

$$O = 0,24 \ \% \qquad N = 0,05 \ \%$$

$$FSSS = 0,29 \ \mu m \ (ASTM \ B330)$$

**Beispiel 4**

Es wurde analog wie in Beispiel 3 gearbeitet, nur mit dem Unterschied, daß vor dem Hochtemperaturschritt das Karbidpulver mit 0,6 % $CT_3C_2$ und, um den theoretischen Kohlenstoffgehalt zu gewähleisten, mit einer berechneten Menge Kohlenstoff versetzt wurde. Folgende Pulverkenndaten wurden erhalten:

$$C_{ges} = 6,14 \ \% \qquad C_{frei} < 0,02 \ \%$$

$$O = 0,36 \ \% \qquad N = 0,05 \ \%$$

$$FSSS = 0,37 \ \mu m \ (ASTM \ B330)$$

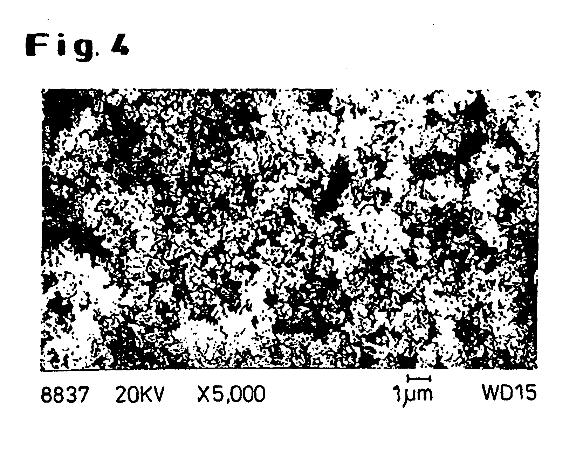

Es lag ein wenig agglomeriertes feinteiliges Pulver vor (Fig. 4).

**Beispiel 5**

Es wurde wie in Beispiel 3 gearbeitet, nur mit dem Unterschied, daß eine Wolframsäure eingesetzt wurde, deren Korngröße bei 0,6 µm (gemessen nach FSSS, gemäß ASTM B330) lag. Das erhaltene Pulver war kaum agglomeriert und lag fein verteilt vor. Folgende Kenndaten wurden ermittelt:

$$C_{ges} = 6,07 \ \% \qquad C_{frei} < 0,04 \ \%$$

$$O = 0,20 \ \% \qquad N = 0,05 \ \%$$

$$FSSS = 0,30 \ \mu m \ (ASTM \ B330)$$

Bestimmung von Gitterverzerrung und Kohärenzlänge

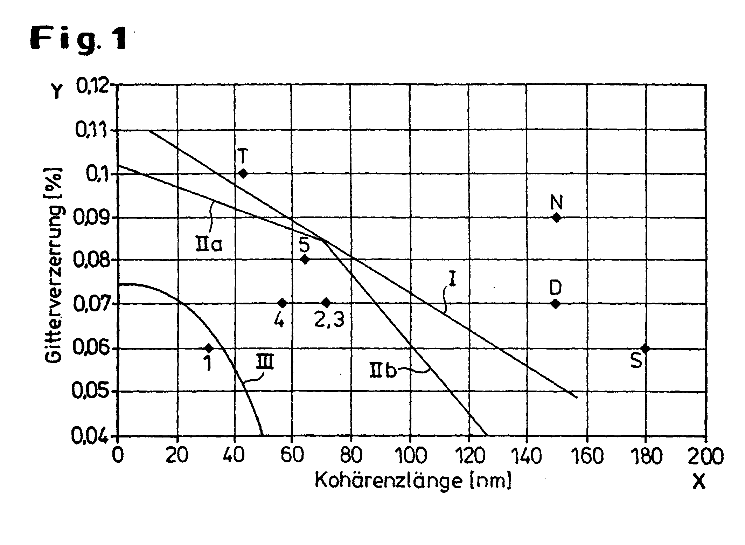

Von allen Pulvermaterialien wurde gemäß dem Verfahren nach BE Warren und BL Averbach, J.Appl. Phys 21 (1950) 595, die Gitterverzerrung und die Kohärenzlänge bestimmt und in ein Diagramm eingetragen. Zusätzlich wurde dieses Verfahren auch auf Wolframkarbidpulver anderer Herkunft (Pulver S, N, T und D) angewendet und in das Diagramm eingetragen (Fig. 1). Die Werte sind in folgender Tabelle zusammengefaßt:

Tabelle 1

| Material | Gitterverzerrung (%) | Kohärenzlänge (nm) |
|---|---|---|
| Beispiel 1 | 0,06 | 30,8 |
| Beispiel 2 | 0,07 | 72 |
| Eispiel 3 | 0,07 | 72 |
| Beispiel 4 | 0,07 | 56,5 |
| Beispiel 5 | 0,08 | 64,5 |
| S | 0,06 | 180 |
| N | 0,09 | 150 |
| T | 0,10 | 43,3 |
| D | 0,07 | 150 |

Hartmetalltests:

Von einigen Materialien wurden Hartmetalltests durchgeführt, wobei mit $Cr_3C_2$ und VC gedopt wurde, bei einem Cobaltanteil in der Hartmetallmischung von 10%. Dafür wurden die Hartmetallmischungen 4 Stunden im Attritor (0,51; 300 g Hartmetallmischung bei 2 100 g Hartmetallkugeln, Größe 3-4 mm) in Hexan gemahlen und bei 1 380°C 45 Minuten im Vakuum gesintert. In Tabelle 2 sind einige Hartmetallkennwerte zusammengefaßt:

Tabelle 2

| Beispiel | Dichte (g/cm$^3$) | $H_{c\,(kA/m)}$ | $4\pi\sigma_s$ ($\mu Tm^3/kg$) | $HV_{30}$ (kg/mm$^2$) | A-Porosität |
|---|---|---|---|---|---|
| 1 | 14,48 | 41,4 | 16,6 | 1925 | A04 ISO 4505 |
| 2 | 14,39 | 42,2 | 15,4 | 2001 | A04 ISO 4505 |
| 3 | 14,42 | 42,2 | 15,3 | 2001 | A04 ISO 4505 |
| 5 | 14,44 | 43,0 | 14,5 | 2010 | A02-A04 ISO 4505 |
| HC = magnetische Koerzitivkraft, gemessen mit Foester Koerzimat 1.096, in kA/m | | | | | |
| $4\pi\sigma_s$ = magnetische Sättigung, gemessen mit Foerster Koerzimat 1.096, in $\mu T\ m^3/kg$ | | | | | |
| $HV_{30}$= Härte nach Vickers, 30 kg Last, in kg pro mm$^2$. | | | | | |

Das Karbidpulver aus Beispiel 1, welches nicht hochtemperaturstabilisiert war, neigte verstärkt zu sekundärem Kornwachstum, wohingegen die übrigen Materialien, die wärmebehandelt waren, homogene Gefüge vorwiesen (Fig. 5 und 6).

**Patentansprüche**

1. Verfahren zur Herstellung von Wolframkarbiden durch Gasphasenkarburierung von Wolframpulvern und/oder geeigneten Wolframvorläuferrerbindungspulvern bei Temperaturen von oberhalb 850°C bis 950°C, **dadurch gekennzeichnet, daß** als karburierende Gasphase ein $CO_2$/CO-Gemisch mit einem $CO_2$-Gehalt, der oberhalb des der Karburierungstemperatur entsprechenden Boudouard-Gleichgewichtsgehaltes liegt, eingesetzt wird und die Karburierung bei einer Kohlenstoffaktivität von 0,4 bis <1 durchgeführt wird.

2. Verfahren nach Anspruch 1, **dadurch gekennzeichnet, daß** die Karburierung bei einer Kohlenstoffaktivität von 0,4 bis 0,9 durchgeführt wird.

3. Verfahren nach Anspruch 1 oder 2, **dadurch gekennzeichnet, daß** die Karburierungstemperatur 900 bis 950°C beträgt.

4. Verfahren nach einem der Ansprüche 1 bis 3, **dadurch gekennzeichnet, daß** die Karburierung bei Karburierungstemperatur über einen Zeitraum von 4 bis 10 Stunden durchgeführt wird.

**5.** Verfahren nach einem der Ansprüche 1 bis 4, **dadurch gekennzeichnet, daß** als Vorläuferverbindung Wolframoxidpulver eingesetzt wird.

**6.** Verfahren nach einem der Ansprüche 1 bis 5, **dadurch gekennzeichnet, daß** die Wolframkarbide nach der Karburierung einer Wärmebehandlung bei 1 150°C bis 1 800°C unterzogen werden.

**Claims**

**1.** Process for producing tungsten carbides by gas carburization of tungsten powders and/or suitable tungsten precursor compound powders at temperatures of over 850°C to 950°C, **characterized in that** the carburizing gas phase used is a $CO_2$/CO mixture with a $CO_2$ content which is above the Boudouard equilibrium content corresponding to the carburization temperature, and the carburization is carried out at a carbon activity of from 0.4 to < 1.

**2.** Process according to Claim 1, **characterized in that** the carburization is carried out at a carbon activity of 0.4 to 0.9.

**3.** Process according to Claim 1 or 2, **characterized in that** the carburization temperature is 900 to 950°C.

**4.** Process according to one of Claims 1 to 3, **characterized in that** the carburization is carried out at the carburization temperature for a period of 4 to 10 hours.

**5.** Process according to one of Claims 1 to 4, **characterized in that** the precursor compound used is tungsten oxide powder.

**6.** Process according to one of Claims 1 to 5, **characterized in that** after the carburization the tungsten carbides are subjected to a heat treatment at 1 150°C to 1800°C.

**Revendications**

**1.** Procédé de préparation de carbures de tungstène par carburation en phase gazeuse de poudres de tungstène et/ou de composés précurseurs de tungstène appropriés à des températures supérieures à 850°C à 950°C, **caractérisé en ce qu'**on utilise comme phase gazeuse de carburation un mélange $CO_2$/CO avec une quantité de $CO_2$, qui est au-dessus de la quantité d'équilibre de Boudouard correspondant à la température de carburation, et **en ce qu'**on effectue la carburation pour une activité de carbone de 0,4 à < 1.

**2.** Procédé selon la revendication 1, **caractérisé en ce qu'**on effectue la carburation pour une activité de carbone de 0,4 à 0,9.

**3.** Procédé selon la revendication 1 ou 2, **caractérisé en ce que** la température de carburation est de 900 à 950°C.

**4.** Procédé selon l'une des revendications 1 à 3, **caractérisé en ce qu'**on effectue la carburation pour une température de carburation au-dessus d'une période de temps de 4 à 10 heures.

**5.** Procédé selon l'une des revendications 1 à 4, **caractérisé en ce qu'**on utilise comme composé précurseur une poudre d'oxyde de tungstène.

**6.** Procédé selon l'une des revendications 1 à 5, **caractérisé en ce qu'**on soumet les carbures de tungstène à la suite de la carburation à un traitement par la chaleur de 1150 à 1800°C. STA 151 ( 99 957 982.4 )

# Fig. 1

# Fig. 2

8689    20KV    X5,000         1µm        WD16

# Fig. 3

8690    20KV    X5,000         1µm        WD16

# Fig. 4

8837    20KV    X5,000                    1μm        WD15

## Fig. 5

9011    20KV    X3,000              10 μm        WD8

## Fig. 6

9010    20KV    X3,000              10 μm        WD 16